# EUROPEAN PATENT SPECIFICATION

(11) **EP 0 424 594 B1**
(45) Date of publication and mention of the grant of the patent: **30.08.1995**
(21) Application number: 89830468.8
(22) Date of filing: 25.10.1989
(51) Int. Cl.: C09D 5/02, C09D 5/29

(54) **Dispersed particle coating compositions and process for the preparation thereof**
Dispergierte Teilchen enthaltende Überzugszusammensetzungen und Verfahren zu deren Herstellung
Composition de revêtement à base de particules dispersées et son procédé de préparation

(43) Date of publication of application: 02.05.1991
(73) Proprietor: MACRI CHEMICALS S.R.L., I-20124 Milan (IT)
(72) Inventor: Cervellati, Gianfranco, I-Ferrara (IT); Meazza, Angelo Luigi, I-20100 Milan (IT)
(74) Representative: Marietti, Giuseppe

(56) References cited:
- US-A- 3 458 328
- US-A- 4 376 654

## Description

The present invention concerns a coating composition of the particle dispersion type as well as the process for the preparation thereof.

The so-called particle-dispersion coating compositions have been known for long time, their characteristic being that of comprising discrete globules of coating material of such a size as to be visible to the naked eye.

According to a first known embodiment, the coating composition consists of a product based on organic solvents immiscible in water, which is dispersed in an aqueous medium to form said particles, e. g. as described in the U.S. patent N. 2591904 in the name of Zola. However, a coating composition substantially free from organic solvents is generally preferred due to its non-toxicity, said coating composition being consisted of dispersed globules of aqueous gel in aqueous medium, as described for example in U.S. patent N. 3458328, in the name of Zola as well.

Said composition essentially consists of a plurality of single globules of colored coating material in the form of a more or less hydrated aqueous gel, dispersed in an aqueous medium containing one or more film-forming materials which act as globule binders upon application.

Said film-forming material generally consists of resins (for example styrene-acrylic resins) dispersed in the aqueous medium in the form of very small particles of about 0.1 to 0.5 microns in size.

In both cases the main advantage of the coating compositions obtained by said dispersions in an aqueous medium lies in having discrete colored globules independent from one another: it is thus possible to mix several preparations of globules with different colors to obtain a single multi-color composition containing globules of two or more different colors resulting in a very pleasing aesthetic effect, without colored globules intermixing.

The coating products or compositions thus obtained are then spray applied on the surfaces to be coated: for this purpose spray guns are used provided with nozzles having such a diameter as to allow the passage of the largest globules in the coating composition.

This method of application involves considerable shortcomings, substantially due to the fact of requiring the use of an equipment comprising, besides the spray gun, an air compressor, even if a small one, as well as of a power source to feed said compressor. It is apparent how this considerably restricts the number of potential users of the above mentioned coating products.

Another shortcoming is due to the fact that because of the necessary poor precision of the spray application the parts which have not to be coated by composition the must be protected.

To overcome these shortcomings, several attempts were made to develop paticle dispesion coating compositions which are applicable in a conventional way, namely by brush or roller. These attempts only concerned the composition free of organic solvent, both for the already mentioned problems of toxicity and for the substantial impossibility for the solvent-based coating compositions to be brush applied.

The main problem arising from application by rolling or brushing of the aforedescribed water-based coating products is that the single globules, having a gelatinous texture as well as considerably greater dimensions than the particles present in a conventional coating composition, will break-down under the action of the brush roller, intermixing and depositing on the surface to be coated in a non uniform way, because all the colored globule portion of the composition moves on the surface under the action of the brush.

Even strongly promoting the insolubilization-precipitation of the dispersed phase, in order to obtain much "harder" particles though not attaining their complete dehydration, the foregoing problems were not overcome; in fact, even if "hardened", the globules continue to break down and to move under the shear action of the brush.

Nor can the gel complete dehydration during its formation be suggested, in that it would result in a coating composition deprived of the desired aesthetic properties and quite similar to coats containing marble or colored granite grits.

On the other side, the mere addition of a thickening agent to the dispersion cannot be suggested, in that conventional thickening agents, such as for instance bentonites, celluloses, guar gum, titanates, casein, etc., if used in the necessary amount to obtain desired viscosity, prevent correct application and selflevelling of the applied product.

As a result surfaces are covered by a coating film which bears the signs of the brush, without none the less succeeding in evenly distributing coloured particles.

A first solution to this problem is the one provided by the United States patent N. 3725089 in the name of Zola, which discloses particle dispersion coating compositions wherein the dimensions of the discrete colored globules do not exceed 25 microns. This solution, however, has the inconvenience of being formed by too small globules to be visible to the naked eye, which characteristic being essential when multi-color coating compositions are used.

A second solution is the one disclosed in the British patent N. 2078243 in the name of Mann. In this patent, the previously mentioned problems are partially solved by employing a particular kind of coating material colored globules, having such dimensions as to be visible to the naked eye, which are produced through two subsequent reactions synergistically interacting with one another.

Moreover, said globules are dispersed in an aqueous medium containing a thickener of the associative type; in this way it is possible to obtain particle dispersion coating compositions to be applied by brush and/or roller and with good selflevelling of the applied product film.

The shortcomings of this solution arise from the fact that the globules produced as described by the Mann patent require a much more complex process than the one normally used for this purpose, and that the colored globules partially superimpose to one another under the brushing action.

There is therefore the need of a coating composition of the particulate dispersion type, obtainable in a simple way with colored globules visible to the naked eye, and which may be applied by brush and/or roller without superimposition, breakdown or displacements of the colored particles.

An object of the present invention is to obtain a particulate-dispesion coating composition to be applied by brush and/or roller, and providing a final film applied to the surface to be coated wherein the particles of coating material are evenly distributed, are not broken or superimposed to one another, and the film surface is levelled.

Another object of the present invention is to provide a process to prepare a particle-dispersion coating composition which may be applied by brush and/or roller, while preserving the desired aesthetic features typical of the spray applied compositions.

These objects are attained by the present invention, which relates to a particle-dispersion coating composition applicable by brush and/or roller as well as to the process for the preparation thereof: said product being endowed, once applied, with the optimal characteristics so far belonging only to the spray applied products.

More particularly, the present invention concerns a coating product, characterized according to claim 1.

The invention moreover concerns a process for the preparation of a coating product of the aforementioned type, characterized according to claim 9.

These and other features of the invention will be now described more in detail with reference to the attached examples given for illustrative and non limiting purposes. It is herein stressed that the definition "particle-dispersion coating composition" means a coating composition essentially consisting of a plurality of discrete colored particles, or globules, dispersed in an aqueous medium. The dispersion may incorporate single color globules or two or more types of colored globules, at least some of which are visible to the naked eye, and the aqueous dispersing medium contains, besides water, other components as well, such as dispersed film-forming resin in the form of non colored particles, capable of providing a coating film binding together the colored globules once the dispersed composition has been applied to the surface to be coated. The colored globules are generally obtained by reacting a first aqueous solution, essentially comprising a hydrophilic colloid, a pigment and optionally a film-forming material, with a second aqueous solution comprising a product which makes the colloid contained in the first dispersion insoluble in the aqueous medium, precipitating it as a gel. The thus obtained insolubilized product is then dispersed in the aqueous medium until globules of the desired size are obtained. In the final product, the aqueous dispersing medium must also contain a film-forming resin acting as binder for the single globules; said resin is preferably added after the insolubilization-dispsersion step. Examples of preferred colloids used are carboxymethylcellulose, anionic polysaccharid gums and acrylic thickeners, while preferred insolubilizing agents are Al and Fe soluble salts. Other usable reagents and compounds are listed in the already mentioned US patent N. 3458328.

Many differently colored products of this kind may be mixed to obtain multi-color coatings having the desired shades, where each particle keeps its original color without mixing with the others.

It has now been surprisingly noted that it is possible to obtain coating compositions of the above discribed type and provided with excellent resistance to the shear action of the brush or roller, by using a film-forming material, or a resin, wherein the dispersed particles in the aqueous medium have average dimensions exceeding 2 microns.

More precisely, it was noted that it is preferable to use particles with average size within the range between 5 and 70 microns, and more preferably within 10 and 15 microns. Any type of resin normally used for the preparation of this kind of coats can be employed to act as binding and film-forming agent, provided it has particles of the required size. An alternative embodiment of the invention, however, envisages the use of particles incorporating, besides the film-forming resin, a colloid-insolubilizing agent system as well.

In other words, it is possible to "increase" the size of the particles of the commercially available film-forming resins by mixing them with a colloid of the previously described type and by precipitating them as a gel by means of a suitable insolubilizing agent according to a methodology well-known to those skilled in the art.

In this case, too, the particles thus obtained provide the composition with the desired properties of resistance, which make application by brush and roller possible; moreover this method have the advantage of giving the possibility of modifying the physical properties (e.g. enhancing the washability) of the original film-forming resins.

These film-forming particles are transparent. This involves several benefits, both aesthetic and practical.

First of all, thanks to a composition having a transparent aqueous dispersing base it is possible to obtain different coatings using different primers, it is furthermore possible to apply the product on previously applied old primers, and finally it is possible to obtain "ad hoc" coating compositions by mixing appropriate amounts of single dehydrated colored globules with the transparent aqueous phase, where the globules are regenerated before the final product is applied, according to a known technique. The latter solution is particularly advisable when selling paints directly prepared by the retailer on the customer's indications by means of a colorimetric system.

A further advantage of the coating composition according to the invention is provided by the fact that it is possible to obtain the whole range of satin effects by simply adding a certain amount of opacifier, proportional to the desired effect, directly to the finished coating.

As previously mentioned, the resistance to shear is provided by the particles of the transparent film-forming material, which therefore must be provided in the product in well defined ratio with respect to the colored globules.

More specifically, the ratio between the amounts (by weight) of said transparent film-forming particles and said colored globules should be within the range between 95:5 and 50:50.

For a better application of the coating composition, the composition according to the invention incorporates a known cellulosic thickener, of the so-called "spater resistence" type, such as for example the Natrosol Plus thickener manufactured by Henkel.

It has moreover been noticed that the preferred composition should also contain a polyurethane thickener in order to obtain the self-leveleing of the coating layer once the latter is applied. Examples of suitable polyurethane-based thickeners are the following:
Borchigel L75, Retaner 100/D, Serad FX 1010, Stabil 100.

The preferred percentages of the cellulosic thickener range between 0,5 and 3,0%, while those of the polyurethane thickener should be within 0,1 and 5% (by weight).

The preparation of the product according to the invention can be accomplished in any known way, provided use is made of dispersions of transparent film-forming materials having particles of the required size.

It is however preferable to prepare separately a dispersion of colored globules, optionally having different colors, and to mix said dispersion with the dispersing aqueous medium containing the transparent film-forming particles. This method is particularly suitable when using transparent film-forming particles prepared by mixing one or more transparent film-forming resins with one or more hydrophilic colloids, insolubilizing the thus obtained mixture with one or more insolubilizing agents and dispersing the insolubilized mixture until particles with the desired size are obtained, according to a technique quite similar to the one known for the preparation of colored globules. Example II discloses a preferred formulation for this type of preparation, where the normal transparent film-forming resin is additioned with a colloidal mixture consisting of carboxymethylcellulose, polysaccharid gum and acrylic thickener in a 1:1:1 ratio.

As previously mentioned, a variant of the preferred process envisages to mix the dispersion of transparent film-forming particles (prepared in any suitable way) with the desired amount of dehydrated colored globules, separately prepared to facilitate storage (and transport) until their use. The dry globules are then regenerated in the said aqueous dispersion until obtaining the desired texture of same. It is obvious that in this case the aqueous dispersion of transparent film-forming particles must incorporate an additional quantity of water for the regeneration of the dry globules.

Some examples of coating products obtained according to the present invention are hereunder reported. In all the following examples, unless otherwise stated, percentages are expressed by weight.

### EXAMPLE I

### Production of particles of transparent film-forming material by insolubilization-precipitation of a film-forming resin

| Solution A (film-forming material + colloid) | |
|---|---|
| Water | q.s. to 100 |
| Polysaccharid gum | 0,16 |
| Carboxymethylcellulose | 0,16 |
| Polyacrylic thickener | 0,16 |
| Bentone Paste | 0,67 |
| Dispersing agent | 1,33 |
| Mildew-inhibiting agent | 0,5 |
| Acrylic resin | 50,0 |
| NH₃ aq. | 0,16 |

Instead of acrylic resin, any other known film-forming binding agent in emulsion can be used, such as vinylversatate, styrol-acrylic resin, vinylmaleate, vinyl resin.

| Solution B (insolubilizing agent) | |
|---|---|
| Water | q.s. to 100 |
| Non-ionic cellulose | 0,64 |
| Aluminium sulfate | 8,18 |
| Alpoclar (aluminium polychloride) | 9,10 |

Obviously, it is possible to vary the percentages of Al salts in order to have only sulfate or polychloride, according to the desired degree of insolubilization-precipitation.

Following the process according to the invention,

| | |
|---|---|
| Solution B | 14,00 |
| Solution A | 64,00 |

are mixed under stirring.

The thus obtained reaction product is kept under vigorous stirring until the desired size of particles is achieved.

The following products are then added:

| | |
|---|---|
| Antifoaming agent | 0,15 |
| Synthetic aragonite | 1,30 |
| Wetting agent | 0,20 |
| NaOH 30% solution | 0,18 |
| Polyurethane thickener (1:1 in water) | 1,80 |
| "Spater resistance" cellulose (4% solution) | q.s. to 100 |

### EXAMPLE II

### Preparation of the coating product

The colored globules are prepared separately in a known way, for instance by mixing 10 parts of the above described Solution B with 74 parts of a Solution C, of a known type, containing for example:

| (Solution C) | |
|---|---|
| Water | q.s. to 100 |
| Mildew inhibiting agent | 1,34 |
| Dispersing agent | 1,34 |
| Carboxymethylcellulose | 1,47 |
| Polysaccharid gum | 0,40 |
| Pigment | 1,35 |
| Film-forming resin (50% emulsion) | 10,06 |
| Ethylene glycol | 1,00 |
| Butyl phthalate | 2,01 |
| Antifoaming agent | 0,40 |

The product thus obtained is dispersed until the required particle size is obtained.

The following compounds:

| | |
|---|---|
| Antifoaming agent | 0,150 |
| Synthetic aragonite | 1,55 |
| Film-forming resin (thickened with 15% of a 1:1 solution of polyurethane thickener in water) | 14,10 |
| NaOH 30% solution | 0,20 |

are then added.

30 parts of the product thus obtained are then mixed with 70 parts of the product obtained in example I. The resulting coating product shows a plurality of colored globules (in this case there is only one color) dispersed in an aqueous base or dispersion of the transparent film-forming agent.

This product can be applied by brush or roller on a colored primer to obtain the desired "multipoint" effect. If globules of many different colors are desired, two or more differently colored solutions C will be prepared insolubilized and mixed with one another and with the transparent dispersion of film-forming particles of example I in the disclosed ratios.

Of course similar products can be obtained by using an aqueous dispersion of transparent film-forming agent already consisting of particles of resin of the desired size, i.e. particles having dimensions not increased by insolubilization-precipitation using a colloid-insolubilizing agent system.

Obviously the invention must not be considered limited to the foregoing examples, which may easily be modified by the skilled technician according to the final use of the coating product.

## Claims

1. A coating composition of the type essentially consisting of a plurality of discrete aqueous colored gel globules, visible to naked eye, dispersed in an aqueous dispersing medium containing one or more film-forming resins in the form of dispersed particles acting as a binder for said plurality of colored gel globules upon application of the coating composition, characterized in that said particles of film forming resin are transparent and have average dimensions exceeding 2 microns; and in that the ratio by weight of said transparent film forming particles and said colored globules is within the range from 95:5 to 50:50.

2. A coating composition according to claim 1, wherein said film forming resin particles have average dimensions within the range from 5 to 70 microns and preferably from 10 to 15 microns.

3. A coating composition according to claim 1 or 2, wherein said film forming resin is selected from acrylic resin, vinylic resin, vinyl-versatate, vinyl maleate and styrol acrylic resin.

4. A coating composition according to any previous claim, wherein said film forming resin particles contain an hydrophilic colloid and an insolubilizing agent for said colloid.

5. A coating composition according to any claim from 1 to 4, wherein said hydrophilic colloid is selected from anionic carboxymethylcellulose, polysaccarid gums and acrylic thickeners or mixtures thereof, and wherein said insolubilizing agent is selected from soluble salts of Fe and Al.

6. A coating composition according to any claim from 1 to 5, wherein said aqueous dispersing medium contains a cellulosic thickener of the so-called "spater resistance" type.

7. A coating composition according to claim 6, further comprising a polyurethane-based thickener.

8. A coating composition according to claim 7, wherein said cellulosic thickener is provided in an amount within the range from 0,5 to 3% by weight, and said polyurethane-based thickener is provided in an amount within the range from 0,1 to 5% by weight.

9. A process for the preparation of a coating composition according to Claims 1-8 comprising the steps of preparing a plurality of discrete colored gel globules visible to naked eye, by reaction of a pigment containing hydrophilic colloid with an insolubilizing agent, separately preparing an aqueous dispersion of transparent particles of a film-forming resin, said particles acting as a binder for said colored globules upon application of said coating composition, and mixing the said colored globules and said film forming particles, characterized in preparing film forming particles having average size exceeding 2 microns, and in mixing them with said colored globules in a ratio by weight of resin particles to colored globules within the range from 95:5 to 50:50.

10. A process according to claim 9, wherein said aqueous dispersion of film forming particles is prepared by mixing one or more film forming resins with one or more hydrophilic colloids, insolubilizing the thus obtained mixture with one or more insolubilizing agents for said colloids and dispersing the insolubilized mixture until the required size for said particles is obtained.

11. A process according to claim 9 or 10, wherein said film forming resin is selected from acrylic resin, vinylic resin, and vinyl-versatate, vinyl maleate and styrol acrylic resins, said hydrophilic colloid is selected from anionic carboxymethylcellulose, polysaccarid gums and acrylic thickeners or mixtures thereof, and wherein said insolubilizing agent is selected from soluble salts of Fe and Al.

## Patentansprüche

1. Beschichtungszusammensetzung im wesentlichen bestehend aus einer Vielzahl einzelner, wäßriger, farbiger Gelkügelchen, die mit bloßem Auge sichtbar und in einem wäßrigen Dispersionsmedium dispergiert sind, das ein oder mehrere filmbildende Harze in der Form von dispergierten Partikeln enthält, die als ein Bindemittel für die Vielzahl farbiger Gelkügelchen beim Auftragen der Beschichtungszusammensetzung wirken, gekennzeichnet dadurch, daß die Partikel des filmbildenden Harzes transparent sind und Durchschnittsgrößen von mehr als 2 Mikrometern besitzen: und dadurch, daß das Gewichtsverhältnis der den transparenten Film bildenden Partikel und der farbigen Kügelchen innerhalb des Bereiches von 95:5 bis 50:50 liegt.

2. Beschichtungszusammensetzung nach Anspruch 1, bei der die filmbildenden Harzpartikel Durchschnittsgrößen innerhalb des Bereiches von 5 bis 70 Mikrometern und vorzugsweise von 10 bis 15 Mikrometern besitzen.

3. Beschichtungszusammensetzung nach Anspruch 1 oder 2, bei der das filmbildende Harz aus Acrylharz, Vinylharz, Vinyl-Versatat, Vinyl-Maleat und Styrol-Acrylharz ausgewählt wird.

4. Beschichtungszusammensetzung nach einem vorhergehenden Anspruch, bei der die filmbildenden Harzpartikel ein hydrophïles Kolloid und ein unlöslich machendes Agens für das Kolloid enthalten.

5. Beschichtungszusammensetzung nach einem Anspruch von 1 bis 4, bei der das hydrophile Kolloid aus anionischer Karboxymethylzellulose, Polysaccharidharzen und Acryldickungsmitteln oder Mischungen davon ausgewählt wird, und bei der das unlöslich machende Agens aus löslichen Salzen von Fe und Al ausgewählt wird.

6. Beschichtungszusammensetzung nach einem Anspruch von 1 bis 5, bei der das wäßrige Dispersionsmedium ein zellulosehaltiges Dickungsmittel von der Art mit sogenannter "Verspritzwiderstandsfähigkeit" enthält.

7. Beschichtungszusammensetzung nach Anspruch 6, die außerdem ein Dikkungsmittel auf Polyurethanbasis enthält.

8. Beschichtungszusammensetzung nach Anspruch 7, bei der das zellulosehaltige Dickungsmittel mit einem Anteil im Bereich von 0,5 bis 3 Gewichtsprozent und das Dickungsmittel auf Polyurethanbasis mit einem Anteil im Bereich von 0,1 bis 5 Gewichtsprozent vorgesehen ist.

9. Verfahren zur Herstellung einer Beschichtungszusammensetzung gemäß den Ansprüchen 1 bis 8, umfassend die Schritte des Herstellens einer Vielzahl einzelner, farbiger, mit bloßem Auge sichtbarer Gelkügelchen durch Reaktion eines Pigment enthaltenden hydrophilen Kolloides mit einem unlöslich machenden Agens, separaten Herstellens einer wäßrigen Dispersion von transparenten Partikeln eines filmbildenden Harzes, wobei die Partikel als ein Bindemittel für die farbigen Kügelchen beim Auftragen der Beschichtungszusammensetzung wirken, und Vermischens der farbigen Kügelchen und der filmbildenden Partikel, gekennzeichnet durch Herstellen filmbildender Partikel mit einer Durchschnittsgröße von mehr als 2 Mikrometern und durch Vermischen derselben mit den farbigen Kügelchen in einem Gewichtsverhältnis von Harzpartikeln zu farbigen Kügelchen im Bereich von 95:5 bis 50:50.

10. Verfahren nach Anspruch 9, bei dem die wäßrige Dispersion von filmbildenden Partikeln hergestellt wird durch Vermischen eines oder mehrerer filmbildender Harze mit einem oder mehreren hydrophilen Kolloiden, unlöslich machen der so erhaltenen Mischung mit einem oder mehreren unlöslich machenden Agenzien für die Kolloide und Dispergieren der unlöslich gemachten Mischung, bis die erforderliche Größe für die Partikel erreicht ist.

11. Verfahren nach Anspruch 9 oder 10, bei dem das filmbildende Harz aus Acrylharz, Vinylharz, Vinyl-Versatat, Vinyl-Maleat und Styrol-Acrylharz, das hydrophile Kolloid aus anionischer Karboxymethylzellulose. Polysaccharidharzen und Acryldickungsmitteln oder Mischungen davon und das unlöslich machende Agens aus löslichen Salzen von Fe und Al ausgewählt wird.

## Revendications

1. Une composition de revêtement, du type comprenant essentialement une pluralité de globules de gel distingués entre eux, aqueux et colorés, qui sont visibles à l'oeil nu, dispersés dans un moyen de dispersion aqueux contenant une ou plusieures résines formatrices de pellicule dans la forme de particules dispersées qui agissent en tant que du liant pour ladite pluralité de globules de gel colorés, pendant l'application de la composition de revêtement, caracterisée en ce que lesdites particules de résine formatrice de pellicule sont transparentes et ont une dimension moyenne superieure à 2 microns; et en ce que le rapport en poids desdites particules transparentes formatrices de pellicule sur lesdits globules colorés est compris entre 95:5 et 50:50.

2. Une composition de revêtement sélon la révendication 1, dans laquelles lesdites particules de resine formatrice de pellicule ont des dimensions moyennes comprises entre 5 et 70 microns et de préference entre 10 e 15 microns.

3. Une composition de revêtement sélon la révendication 1 ou 2, dans laquelle ladite resine formatrice de pellicule est choisie entre la résine acrylique, le résine vinylique, le versatate de vinyle, le maleate de vinyle et la résine styrol-acrylique.

4. Une composition de revêtement sélon una des révrndications précedentes, dans laquelle ledites particules de résine formatrice de pellicule contiennent un colloïde hydrophile et un agent d'insolubilisation pour ledit colloïde.

5. Une composition de revêtement selon une des révendications 1 à 4, dans laquelle ledit colloïde hydrophile est choisi entre la carboxymétilcellulose anionique, les caoutchouchs polysaccharides et les epaississeurs acryliques ou leur melanges, et dans laquelle ledit agent d'insolubilisation est choisi entre des sels solubles de Fe et Al.

6. Une composition de revêtement sélon une des révendications 1 à 5, dans laquelle ledit moyen de dispersion aqueux contient un epaississeur cellulosique du type dit à "spater resistance".

7. Une composition de revêtement sélon la revendication 6, comprenant en outre un epaississeur à base de polyurethane.

8. Une composition de revêtement sélon la révendication 7, dans laquelle ledit epaississeur cellulosique se trouve dans une quantité comprise entre 0,5 et 3% en poids et ledit epaississeur à base de polyurethane se trouve dans une quantité comprise entre 0,1 et 5% en poids.

9. Un procédé pour la préparation d'une composition de revêtement sélon les révendications 1 à 8, comprenant les stades de préparer une pluralité de globules de gel distingués entre eux et colorés, visible à l'oeil nu, par réaction d'un pigment contenant un colloïde hydrophile avec un agent d'insolubilisation; de préparer séparement une dispersion aqueuse de particules transparentes d'une résine formatrice de pellicule, lesdites particules agissant en tant que liant pour lesdits globules colorés à la suite de l'application de ladite composition de revêtement; et de mélanger lesdits globules colorés et lesdites particules formant pellicule, caracterisé en ce que on prépare des particules formant pellicule ayant une dimension moyenne superieure à 2 microus, et on les mélange avec lesdits globules colorés dans un rapport de 95:5 à 50:50.

10. Un procédé sélon la révendication 9, dans laquel ladite dispersion aqueuse de particules formatrices de pellicule est preparée par mélange d'une ou plus résines formatrices de pellicule avec un o plus colloïdes hydrophiles, insolubilisation du mélange ainsi obtenu avec un ou plus agents d'insolubilisation pour lesdits colloïdes et dispersion du mélange insolubilisé jusqu'à l'obtention des dimensions requises pour lesdites particules.

11. Un procédè sélon la révendication 9 ou 10, dans lequel ladite résine formatrice de pellicule est choisie entre: résine acrylique, résine vinylique, et versatate de vinyle, maleate de vinyle et résines styrol-acryliques, ledit colloïde hydrophile est choisi entre carboxymetil cellulose anionique, caoutchouchs polysaccharides et epaississants acryliques ou leur mélanges, et dans lequel ledit agent d'insolubilisation est choisi entre des convenables sels de Fe et Al.
